# FASCICULE DE BREVET EUROPEEN

(11) **EP 3 311 200 B1**
(45) Date de publication et mention de la délivrance du brevet: **02.10.2019**
(21) Numéro de dépôt: 16730316.3
(22) Date de dépôt: 10.06.2016
(51) Int. Cl.: G01V 1/157, E21B 28/00, E21B 43/00, G01V 1/40

(54) **OUTIL DE GÉNÉRATION D'ONDES SISMIQUES TEL UN ÉCLATEUR D'UN DISPOSITIF DE GÉNÉRATION D'ARCS ÉLECTRIQUES**
WERKZEUG ZUR ERZEUGUNG SEISMISCHER WELLEN, WIE EINE FUNKENSTRECKE EINER VORRICHTUNG ZUR ERZEUGUNG VON LICHTBÖGEN
SEISMIC WAVE GENERATING TOOL, SUCH AS A SPARK GAP OF A DEVICE FOR GENERATING ELECTRIC ARCS

(30) Priorité: 17.06.2015 FR 1555544
(43) Date de publication de la demande: 25.04.2018
(73) Titulaire: ENE29 S.àr.l., 2453 Luxembourg (LU)
(72) Inventeur: DELCHAMBRE, Michael, 31100 Toulouse (FR); MINAKATA ESPARZA, Jesus, Calgary, Alberta T2E 8W1 (CA)
(74) Mandataire: Cabinet Plasseraud
(86) Numéro de dépôt international: PCT/EP2016/063337
(87) Numéro de publication internationale: WO 2016/202698

(56) Documents cités:
- US-A- 3 180 418
- US-A1- 2014 060 844
- US-B1- 6 227 293

## Description

La présente invention concerne un outil de génération d'ondes sismiques tel un éclateur d'un dispositif de génération d'arcs électriques.

Un tel dispositif est destiné à venir prendre place dans un puits profond (par exemple plusieurs kilomètres). La génération d'un arc électrique est alors utilisée par exemple pour créer une onde sismique afin de stimuler la production d'hydrocarbure.

Il existe plusieurs procédés de stimulation d'hydrocarbure (ou en Anglais « Enhanced Oil Recovery »). Un des procédés les plus utilisés consiste en une génération d'une décharge électrique impulsionnelle dans un liquide comme par exemple de l'hydrocarbure. Cette décharge électrique engendre une très forte onde de choc qui se propage dans un réservoir naturel d'hydrocarbure.

Le document US 4345650 divulgue un éclateur ainsi qu'un procédé permettant la récupération électrohydraulique de pétrole brut. Pour ce faire, une étincelle électrique est générée entre deux électrodes créant une explosion au niveau ou à proximité d'une formation pétrolifère souterraine. Cette explosion génère des ondes de choc et des ondes hydrauliques qui se propagent dans la formation pétrolifère souterraine et provoquent la migration forcée d'un mélange d'hydrocarbures vers des puits adjacents nommés puits de collecte.

Les figures 5A à 5D du document US 4345650 montrent une forme de réalisation de l'éclateur proposé par ce document. L'éclateur est composé entre autres de deux électrodes, d'une capacité de stockage et d'un déclencheur. L'éclateur est relié à un camion de contrôle à l'aide d'un câble qui permet, d'une part, de contrôler divers paramètres de l'éclateur et, d'autre part, de fournir de l'énergie électrique à la capacité de stockage. Pour obtenir une explosion de forte puissance, la capacité de stockage est placée au plus proche des électrodes pour éviter des pertes électriques éventuelles. Une étincelle est obtenue entre les deux électrodes lorsque l'énergie électrique stockée dans la capacité de stockage est appliquée aux bornes des électrodes à l'aide du déclencheur ce qui provoque un arc électrique au niveau des électrodes.

Le document US 6227293 décrit un dispositif semblable qui peut également être utilisé dans un puits de forage pour la stimulation de la production de pétrole. Le dispositif décrit comporte au moins une source d'alimentation électrique pulsée positionnée dans un puits. La source d'alimentation présente d'une part un générateur électrohydraulique et d'autre part un générateur électromagnétique.

La forme de réalisation présentée à la figure 2 du document US 6227293 illustre un éclateur avec deux électrodes disposées dans un puits rempli d'un fluide nommé fluide de forage qui permet une propagation optimale des ondes générées par un arc électrique entre les électrodes. Chaque électrode est portée par un support d'électrode et des bras métalliques relient les deux supports d'électrode. Ces bras métalliques s'étendent parallèlement aux électrodes à une distance déterminée de celles-ci.

Dans une variante de réalisation, le document US 6227293 divulgue l'utilisation d'une membrane pour contenir le milieu dans lequel se produit la décharge entre les électrodes. Ainsi, ce milieu présente toujours les mêmes caractéristiques ce qui permet d'obtenir une reproductibilité des tirs.

Dans une telle structure, il convient d'éviter qu'une décharge électrique parasite se produise entre une électrode et un bras métallique. En effet, cette décharge serait alors non contrôlée et pourrait engendrer une usure prématurée voire la casse de l'éclateur.

Pour diminuer le risque d'apparition d'un arc électrique parasite, le document WO2015040555 divulgue un éclateur d'un dispositif de génération d'arc électrique pour créer une onde sismique avec une première électrode associée à un premier support d'électrode, une seconde électrode associée à un second support d'électrode et présentant, d'une part, en vis-à-vis de la première électrode une surface concave et, d'autre part, un diamètre sensiblement supérieur au diamètre de la première électrode et au moins un bras de liaison reliant le premier support d'électrode au second support d'électrode.

Le document WO2015040556 propose une autre solution technique pour diminuer le risque d'apparition d'un arc électrique parasite. Il divulgue un éclateur comportant un premier corps portant un premier support d'électrode associé à une première électrode présentant une première extrémité d'électrode, un second corps portant un second support d'électrode associé à une seconde électrode disposée en vis-à-vis de la première extrémité d'électrode, et un bras de liaison reliant le premier corps au second corps. Le premier corps et le second corps présentent une forme extérieure globalement cylindrique et sont alignés sur un même axe longitudinal. La première extrémité d'électrode est décalée par rapport à l'axe longitudinal du côté opposé au bras de liaison. L'invention concerne également un dispositif de génération d'arc électrique comportant un tel éclateur.

Pour pouvoir être utilisé dans un maximum de puits, le diamètre des éclateurs est en constante diminution (de 140 mm à moins de 80 mm) ce qui engendre une diminution de la distance entre les électrodes et les bras. Ainsi, il y a un risque potentiel non négligeable de création d'un arc électrique entre une électrode et un bras, ce qui a pour effet de diminuer d'une part les performances de l'éclateur et d'autre part la durée de vie de celui-ci. Par exemple, les dispositifs de l'art antérieur peuvent réaliser 3000 à 4000 tirs avant une maintenance de l'éclateur, c'est-à-dire un changement des électrodes et parfois un changement complet de l'éclateur.

La présente invention a alors pour but de fournir un outil de génération d'ondes sismiques tel un éclateur dans lequel des électrodes sont disposées dans une chambre de décharge entre des bras de maintien mais pour lequel le risque qu'un arc électrique parasite se produise entre une électrode et un bras de maintien est sensiblement réduit par rapport aux dispositifs de l'art antérieur.

Avantageusement, la présente invention permettra la miniaturisation d'un outil de génération d'ondes sismiques par rapport aux éclateurs connus de l'art antérieur et/ou avec une durée de vie allongée. Ainsi, l'outil de génération d'ondes sismiques selon la présente invention pourra effectuer par exemple plusieurs dizaines de milliers de tirs avant une maintenance de celui-ci.

À cet effet, la présente invention propose un outil de génération d'ondes sismiques tel un éclateur d'un dispositif de génération d'arcs électriques comportant :
- une partie supérieure et une partie inférieure définissant entre elles une chambre de décharge,
- au moins un bras de maintien reliant la partie supérieure à la partie inférieure,
- une première électrode associée à la partie supérieure et une seconde électrode associée à la partie inférieure, toutes deux disposées dans la chambre de décharge,
caractérisé en ce qu'il comprend un premier dispositif déployable reliant la partie supérieure à la partie inférieure, et
en ce que le bras de maintien comprend une partie isolante électriquement en vis-à-vis des électrodes, et
en ce qu'un retour de courant est réalisé par le premier dispositif déployable, le dispositif déployable pouvant présenter un état rétracté et un état déployé dans lequel il est écarté des électrodes.

Ainsi, lorsque le premier dispositif déployable est rétracté, l'encombrement de l'outil est relativement faible, ce qui facilite son déplacement dans des puits. Lorsque le premier dispositif déployable est déployé, il est écarté des électrodes, ce qui permet de diminuer le risque qu'un arc électrique parasite se produise entre une électrode et un bras.

Une première forme de réalisation prévoit que le premier dispositif déployable présente une première bague mobile par rapport à la partie supérieure et au moins un bras souple avec une première extrémité reliée à la première bague mobile et une seconde extrémité reliée à la partie inférieure de l'outil.

Pour faciliter la déformation du bras souple, celui-ci présente par exemple une forme de languette. Ainsi, il est possible de déformer chaque bras souple avec une force mécanique relativement faible.

Dans une variante, chaque bras souple est à l'extérieur de la chambre de décharge lorsque le dispositif déployable est dans son état déployé.

On prévoit dans une forme de réalisation que la première bague mobile vient entourer la partie supérieure de l'outil et est adaptée pour se déplacer selon un axe longitudinal de ladite partie supérieure. Ainsi, les bras souples sont déformés et sont écartés des électrodes ce qui permet de limiter le risque de départ d'arcs électriques parasites.

La première bague mobile peut être associée à des moyens d'engrenages pour améliorer la précision de son déplacement.

Dans une variante, la première bague mobile présente un taraudage et la partie supérieure de l'outil présente un filetage. Le déplacement de la bague est alors hélicoïdal, ce qui engendre une torsion des bras souples. Cette torsion, permet en outre d'obtenir une raideur plus importante des bras souples lorsque la première bague mobile est dans la position basse.

Pour améliorer la durée de vie d'un tel dispositif, le bras souple (ou chaque bras souple) présente par exemple une armature métallique. Ainsi, il est possible d'effectuer un nombre important de déformations du bras souple sans le détériorer.

Pour diminuer le risque d'apparition d'arcs électriques parasites entre le bras souple et les électrodes, celui-ci comprend avantageusement une partie isolante électriquement en vis-à-vis des électrodes.

Lorsque le diamètre du puits est relativement important, il est prévu une variante de réalisation dans laquelle un second dispositif déployable relie la partie supérieure à la partie inférieure, le second dispositif déployable pouvant présenter un état rétracté et un état déployé dans lequel il est écarté de la chambre de décharge. Ce second dispositif déployable peut être utilisé notamment pour venir centrer l'outil dans le puits.

Dans une variante, le premier dispositif déployable présente une première bague mobile par rapport à la partie supérieure et au moins un bras souple avec une première extrémité reliée à la première bague mobile et une seconde extrémité reliée à la partie inférieure de l'outil (comme décrit précédemment par exemple) ; le second dispositif déployable présente au moins un bras déformable et une seconde bague mobile qui est disposée autour de la partie supérieure de l'outil du côté opposé à la partie inférieure, le bras déformable comportant une première extrémité reliée à la seconde bague mobile et une seconde extrémité reliée à la partie inférieure de l'outil. Ainsi, il est possible de déformer chaque bras déformable à l'aide de la seconde bague mobile afin de centrer l'outil dans le puits.

Dans un souci d'amélioration des performances d'un tel outil et plus spécialement d'amélioration de sa durée de vie, le bras déformable comprend par exemple une armature métallique.

Pour éviter un retour de courant dans les parois du puits, le bras déformable est avantageusement en un matériau non conducteur électrique. Pour des raisons mécaniques, il est toutefois envisageable d'avoir un bras déformable au moins partiellement réalisé dans un matériau conducteur de l'électricité.

Pour améliorer la protection du bras déformable de tout risque d'apparition d'arcs électriques parasites, celui-ci comprend par exemple une partie isolante électriquement en vis-à-vis des électrodes.

Des détails et avantages de la présente invention apparaitront mieux de la description qui suit, faite en référence au dessin schématique annexé sur lequel :
La figure 1 est une vue de principe en coupe longitudinale d'un outil de stimulation selon la présente invention,
La figure 2 est une vue de principe en coupe longitudinale de l'outil de stimulation de la figure 1 représentant un dispositif déployable dans une autre position, et
La figure 3 une vue de principe en coupe longitudinale selon un autre mode de réalisation de l'outil de stimulation.

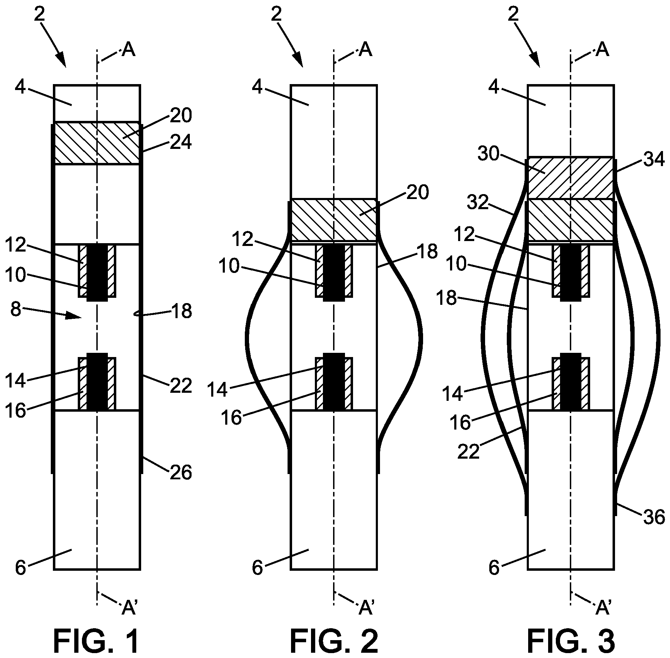

La figure 1 représente de façon schématique un outil 2 de stimulation tel un éclateur comportant une partie supérieure 4, une partie inférieure 6 définissant entre elles une chambre de décharge 8, une première électrode 10 associée à un premier support 12, une seconde électrode 14 associée à un second support 16 et deux bras de maintien 18 disposés entre la partie supérieure 4 et la partie inférieure 6 de l'outil 2.

On suppose dans la description qui suit que la partie supérieure 4 et la partie inférieure 6 sont alignées verticalement, et que la partie supérieure 4 se situe au-dessus de la partie inférieure 6.

La partie supérieure 4 et la partie inférieure 6 présentent préférentiellement une forme globalement cylindrique circulaire. Elles sont disposées coaxialement et ont un même diamètre. La partie supérieure 4 et la partie inférieure 6 sont en un matériau qui doit être à la fois résistant à de fortes pressions et à de fortes températures mais également conducteur électrique. Ainsi, par exemple la partie supérieure 4 et la partie inférieure 6 sont en acier.

L'espacement entre la partie supérieure 4 et la partie inférieure 6 définit la chambre de décharge 8. Cette dernière présente aussi une forme cylindrique circulaire de même diamètre que la partie supérieure 4 et que de la partie inférieure 6. Sa hauteur correspond à la distance séparant la partie supérieure 4 à la partie inférieure 6.

La partie supérieure 4 est adaptée pour entre autres supporter la première électrode 10 à l'aide du premier support 12. Le premier support 12 est par exemple de forme tubulaire présentant une première extrémité fixée à la partie supérieure 4 et une seconde extrémité adaptée pour maintenir la première électrode 10 dans la chambre de décharge 8. Par exemple, le premier support 12 est composé d'un matériau isolant électrique comme par exemple en matière céramique ou thermoplastique.

La première électrode 10 est une électrode de type connu par l'homme du métier. Il s'agit par exemple d'une électrode en forme de tige cylindrique circulaire, éventuellement pourvue d'une pointe à son extrémité libre. D'autres types d'électrodes compatibles avec l'application peuvent bien sûr être utilisés.

Un dispositif électronique d'alimentation comprenant généralement une unité de stockage électrique comme par exemple une série de condensateurs et un commutateur est utilisé pour alimenter en énergie électrique la première électrode 10. Ce dispositif électronique d'alimentation est utilisé pour appliquer à la première électrode 10 un potentiel électrique très élevé en un temps très bref tout en y faisant passer un courant de forte intensité.

La partie inférieure 6 supporte la seconde électrode 14 à l'aide du second support 16. Le second support 16 présente par exemple une forme tubulaire cylindrique et est composé d'un matériau conducteur électrique. Ainsi, la seconde électrode 14 est au même potentiel que la partie inférieure 6 de l'outil 2.

La seconde électrode 14 est elle aussi connue de l'homme du métier. Pour garantir un arc électrique optimum entre la première électrode 10 et la seconde électrode 14, cette dernière a préférentiellement un diamètre au moins égal à celui de la première électrode 10. La seconde électrode 14 est couplée à une masse électrique pouvant être celle du dispositif électronique d'alimentation.

Dans un mode de réalisation préféré, la première électrode 10 et la seconde électrode 14 présentent chacune de préférence un axe de symétrie, et les deux axes de symétrie sont de préférence confondus en un axe appelé par la suite axe longitudinal A-A' correspondant aussi à l'axe de la partie supérieure 4 et de la partie inférieure 6, comme illustré à la figure 1. Ainsi, la première électrode 10 est alignée par rapport à la seconde électrode 14. On remarque plus généralement que l'outil 2 est sensiblement symétrique par rapport à l'axe longitudinal A-A'.

Comme représenté à la figure 1, la partie supérieure 4 est liée mécaniquement à la partie inférieure 6 par deux bras de maintien 18. Cependant, on pourrait avoir par exemple un, trois, quatre ou tout autre nombre de bras de maintien 18. Les bras de maintien 18 sont positionnés à la périphérie de la chambre de décharge 8. Les bras de maintien 18 présentent préférentiellement une forme de profilé carré. Dans une variante, les bras de maintien 18 peuvent présenter une forme de tige. Préférentiellement, les bras de maintien 18 sont en un matériau non conducteur électrique comme par exemple en matériau synthétique et/ou composite. L'utilisation d'un tel matériau permet, d'une part, d'obtenir une bonne isolation électrique entre les électrodes 10 et 14 et les bras de maintien 18 et, d'autre part, d'obtenir une bonne tenue structurale de la partie inférieure 6 par rapport à la partie supérieure 4. En effet, il est important de conserver une distance constante entre la première électrode 10 et la seconde électrode 14 malgré des impacts répétés engendrés par des arcs électriques dans la chambre de décharge 8.

Dans une autre variante, les bras de maintien 18 présentent par exemple une armature métallique ayant un rôle structurel et une partie en matériau synthétique. Le matériau synthétique peut recouvrir soit partiellement (du côté des électrodes) ou préférentiellement totalement l'armature métallique du bras de maintien 18.

Pour réaliser un retour de courant entre la partie supérieure 4 et la partie inférieure 6, il est proposé un premier dispositif déployable reliant la partie supérieure 4 à la partie inférieure 6, le dispositif déployable pouvant présenter un état rétracté et un état déployé dans lequel il est écarté des électrodes 10, 14. Ainsi, la seconde électrode 14 est via le second support 16, la partie inférieure 6 et le dispositif déployable couplée à la masse électrique.

Le dispositif déployable présente une première bague mobile 20 se déplaçant d'une position haute à une position basse et au moins un bras souple 22.

La bague mobile 20 présente une forme annulaire adaptée à la forme de la surface extérieure de la partie supérieure 4. Elle est montée à la périphérie de la partie supérieure 4 de manière à pouvoir se déplacer de bas en haut (ou parallèlement à l'axe longitudinal A-A') autour de la partie supérieure 4 entre une position dite position basse et une position dite position haute.

La forme de réalisation représentée à la figure 1 prévoit deux bras souples 22. Cependant, on pourrait avoir par exemple un, trois, quatre ou tout autre nombre de bras souples 22.

Un bras souple 22 présente une première extrémité 24 qui est reliée à la première bague mobile 20 et une seconde extrémité 26 qui est reliée à la partie inférieure 6 de l'outil 2.

Dans un mode de réalisation préféré, la seconde extrémité 26 du bras souple 22 est soudée à la partie inférieure 6. D'autres systèmes de fixation peuvent également être utilisés.

Les bras souples 22 présentent par exemple une forme de languette et sont composés d'un matériau ou de plusieurs matériaux adaptés pour résister aux déflagrations engendrées par les arcs électriques au niveau de la chambre de décharge 8. Dans un mode de réalisation avantageux, chaque bras souple 22 est composé d'un matériau composite et/ou synthétique isolant électrique et d'une armature électriquement conductrice. L'armature électriquement conductrice peut être en métal ou en alliage métallique et est préférentiellement disposée sur une face extérieure des bras souples 22, c'est-à-dire sur la face des bras souples 22 opposée à la chambre de décharge 8. Ainsi, grâce à une telle disposition, la continuité électrique entre la partie supérieure 4 et la partie inférieure 6 est réalisée par une liaison extérieure à la chambre de décharge 8 ce qui permet de diminuer la probabilité qu'un arc électrique parasite apparaisse entre les bras souples 22 (et plus précisément leur armature métallique) et la première électrode 10 par rapport aux dispositifs de l'art antérieur. Une autre structure, avec même éventuellement une armature métallique orientée vers les électrodes, pourrait être envisagée. En effet, les bras souples 22 uniquement de par leur éloignement des électrodes lors de la génération d'arcs électriques doivent permettre déjà d'éviter tout arc électrique parasite.

Pour diminuer la probabilité qu'un arc électrique se créé entre les bras souples 22 et la première électrode 10 et donc améliorer la durée de vie de l'outil 2, les bras souples 22 sont adaptés pour se déformer de sorte qu'ils soient à l'extérieur de la chambre de décharge 8 lorsque la première bague mobile 20 est dans sa position basse.

Pour déformer les bras souples 22 vers l'extérieur de la chambre de décharge 8, la première bague mobile 20 se déplace de la position haute (figure 1) vers la position basse (figure 2).

Dans un exemple de réalisation préféré, la première bague mobile 20 coulisse selon l'axe longitudinal A-A' autour de la partie supérieure 4 pour passer de sa position haute (figure 1) à sa position basse (figure 2). Le déplacement de la première bague mobile 20 peut être réalisé à l'aide par exemple d'un vérin et/ou d'un système d'engrenages (non représentés sur les figures).

En variante, le déplacement de la bague mobile 20 selon l'axe longitudinal A-A' peut être inspiré de la solution technique proposée par la demande FR 2999221A1. Ainsi, comme proposé dans ce document, la bague mobile 20 est bloquée en rotation et présente un taraudage (non visible sur les figures) adaptée pour coopérer avec un filetage d'une pièce mobile en rotation et fixe en translation. La pièce mobile en rotation (non visible sur les figures) entoure la partie supérieure 4 afin de permettre le déplacement de la bague mobile 20 en translation selon l'axe longitudinal A-A' lorsque la pièce mobile en rotation tourne autour de la partie supérieure 4.

Préférentiellement, la première bague mobile 20 est en un matériau conducteur électrique comme par exemple de l'acier.

Lorsque la première bague mobile 20 est dans la position haute (figure 1) les bras souples 22 ne sont pas déformés et s'étendent longitudinalement à la périphérie de la chambre de décharge 8. Dans cette position, les bras souples 22 se trouvent juste à la périphérie de la chambre de décharge 8 comme illustré à la figure 1.

Lorsque la première bague mobile 20 est dans sa position basse comme illustré à la figure 2, les bras souples 22 sont déformés à l'extérieur de la chambre de décharge 8 et sont éloignés des électrodes 10, 14 ce qui permet de diminuer le risque d'apparition d'arcs électriques parasites entre une des électrode 10, 14 et un bras souple 22. Dans cette position, la première bague mobile 20 est près de la chambre de décharge 8.

Grâce à la déformation des bras souples 22, un tel outil 2 pourra effectuer plusieurs dizaines de milliers de tirs (un tir correspond à un arc électrique généré entre les électrodes 10 et 14) avant une maintenance de celui-ci, alors que les dispositifs de l'art antérieur peuvent seulement effectuer des milliers de tirs.

Dans cette position (positon basse), l'encombrement de l'outil 2 est plus important de par la déformation des bras souples 22 (figure 2) ce qui permet en outre de centrer l'éclateur 2 dans un puits dans lequel il se trouve. En effet, une fois les bras souples 22 déformés ceux-ci viennent en contact avec le conduit du puits. De plus, un tel positionnement au centre du puits permet une meilleure répartition de l'explosion et améliore sensiblement les résultats de l'outil 2 par rapport aux dispositifs de l'art antérieur.

En variante, pour améliorer la répétabilité des explosions de l'outil 2, une butée (non représenté sur les figures) est positionnée au niveau de l'extrémité de la partie supérieure 4 proche de la chambre de décharge 8. Ainsi, lorsque la première bague mobile 20 vient dans la position basse, celle-ci restera positionnée autour de la partie supérieure 4 et ne pourra venir au niveau des bras de maintien 18.

La première bague mobile 20 peut présenter un taraudage. Dans ce cas, la partie supérieure 4 présente un filetage complémentaire du taraudage. Le déplacement de la première bague mobile 20 de sa position haute à sa position basse sera alors un déplacement hélicoïdal autour de la partie supérieure 4 provoquant une torsion des bras souples 22.

La figure 3 présente une autre variante de réalisation. Dans cette variante, les caractéristiques de la partie supérieure 4, de la partie inférieure 6, de la chambre de décharge 8 et des électrodes 10 et 14 sont semblables à celles présentées dans les paragraphes précédents. De même, la première bague mobile 20 et les bras souples 22 présentent eux aussi les mêmes caractéristiques tant au niveau structurel que fonctionnel.

Dans ce mode de réalisation, une seconde bague mobile 30 et au moins un bras déformable 32 sont utilisés. La seconde bague mobile 30 est disposée autour de la partie supérieure 4 de l'outil 2 mais au-dessus de la première bague mobile 20. La forme ainsi que le matériau constitutif de la seconde bague mobile 30 sont par exemple (mais non nécessairement) identiques à ceux de la première bague mobile 20. Ainsi, comme pour la première bague mobile 20, La seconde bague mobile 30 présente une forme annulaire adaptée à la forme de la surface extérieure de la partie supérieure 4 et est montée à la périphérie de la partie supérieure 4 de manière à pouvoir se déplacer de bas en haut (ou parallèlement à l'axe longitudinal A-A') autour de la partie supérieure 4.

Préférentiellement, la seconde bague mobile 30 est indépendante de la première bague mobile 20. Ainsi, le déploiement des bras souples 22 et le déploiement des bras déformables 32 sont réalisés indépendamment permettant ainsi de contrôler la déformation des bras déformables 32 en fonction du diamètre du puits.

Les bras déformables 32 relient la seconde bague mobile 30 à la partie inférieure 6. Les bras déformables 32 présentent une longueur supérieure à la longueur des bras souples 22. Ainsi, lorsque les bras déformables 32 sont déformés ils sont plus éloignés de la chambre de décharge 8 que les bras souples 22 (première bague mobile 20 en position basse).

Les bras déformables 32 sont composés dans une forme de réalisation préférée exclusivement d'un matériau isolant comme par exemple un matériau composite et ne présentent pas d'armature électriquement conductrice. On peut cependant envisager pour des raisons mécaniques d'avoir par exemple une âme métallique enrobée dans un matériau non conducteur.

Préférentiellement, les bras déformables 32 sont parallèles à l'axe A-A' et disposés à la périphérie proche de la chambre de décharge 8. Par exemple, les bras déformables 32 présentent une forme de languette.

Chaque bras déformable 32 présente une première extrémité 34 fixée à la seconde bague mobile 30 et une seconde extrémité 36 fixée à la partie inférieure 6. Préférentiellement, des moyens de vissage sont utilisés pour réaliser ces fixations. Bien entendu, d'autres moyens de fixation peuvent être utilisés.

Préférentiellement, la seconde bague mobile 30 est adaptée pour se déplacer d'une position élevée à une position abaissée. Seulement la position abaissée de la seconde bague mobile 30 est représentée sur la figure 3.

La première bague mobile 20 et la seconde bague mobile 30 se déplacent respectivement de la position haute à la position basse et de la position élevée à la position abaissée simultanément. Ainsi, par exemple, lorsque la première bague mobile 20 est dans la position haute alors la seconde bague mobile 30 est dans la position élevée. Il en est de même pour les autres positions.

Avantageusement, lorsque la première bague mobile 20 et la seconde bague mobile 30 sont respectivement dans la position haute et élevée alors l'outil 2 présente un encombrement plus faible que ceux des dispositifs de l'art antérieur.

Lorsque la première bague mobile 20 est dans la position basse et la seconde bague mobile 30 est dans la position abaissée alors l'encombrement de l'outil 2 est augmenté ce qui permet de centrer l'outil 2 dans des puits de diamètres relativement importants.

Avec un tel dispositif, pour diminuer le risque qu'un retour électrique se produise sur les parois du puits durant une décharge électrique il est proposé d'avoir des bras déformables non conducteurs ou tout du moins avec une face destinée à venir en contact avec le puits réalisée dans un matériau isolant, ce qui améliore la sécurité du chantier et des personnels travaillant en surface. Toutefois, on peut remarquer que ceci n'est pas obligatoire puisque normalement la surface extérieure (et donc les bagues mobiles) de la partie supérieure 4 et de la partie inférieure 6 sont à la masse.

Dans une variante de réalisation, les bras souples 22 et les bras déformables 32 sont disposés en quinconce autour de la chambre de décharge 8.

Les formes de réalisation de l'invention permettent de dissocier la liaison mécanique de la liaison électrique entre les parties d'un éclateur. De ce fait, grâce à l'invention, il est possible d'empêcher l'apparition d'un arc électrique parasite entre les électrodes et chaque bras pour un éclateur à faible encombrement. De plus, il est maintenant possible de centrer l'outil dans des puits dont le diamètre peut être variable. Ainsi, l'outil est compatible avec un grand nombre de puits tout en assurant à la fois une très bonne efficacité des explosions et en empêchant l'apparition d'arcs électriques parasites ce qui permet d'améliorer sa durée de vie par rapport aux éclateurs de l'art antérieur. Par exemple, avec un tel dispositif il pourra être réalisé plusieurs dizaines de milliers d'arcs électriques avant une maintenance de l'outil.

La présente invention fournit ainsi des moyens permettant de limiter les risques de fuite d'un arc électrique. Elle permet aussi de miniaturiser un éclateur pour pouvoir accéder à des puits, dont le diamètre peut être variable et descendre jusqu'à 50 mm.

La présente invention ne se limite pas aux formes de réalisation décrites ci-dessus à titre d'exemples non limitatifs et représentées au dessin et aux variantes évoquées mais elle concerne toute forme de réalisation à la portée de l'homme du métier dans le cadre des revendications ci-après.

## Revendications

1. Outil (2) de génération d'ondes sismiques tel un éclateur d'un dispositif de génération d'arcs électriques comprenant :
- une partie supérieure (4) et une partie inférieure (6) définissant entre elles une chambre de décharge (8),
- au moins un bras de maintien (18) reliant la partie supérieure (4) à la partie inférieure (6),
- une première électrode (10) associée à la partie supérieure (4) et une seconde électrode (14) associée à la partie inférieure (6), toutes deux disposées dans la chambre de décharge (8),
**caractérisé en ce qu'**il comprend un premier dispositif déployable reliant la partie supérieure (4) à la partie inférieure (6), et
**en ce que** le bras de maintien (18) comprend une partie isolante électriquement en vis-à-vis des électrodes (10, 14), et
**en ce qu'**un retour de courant est réalisé par le premier dispositif déployable, le dispositif déployable pouvant présenter un état rétracté et un état déployé dans lequel il est écarté des électrodes (10, 14).

2. Outil (2) de génération d'ondes sismiques selon la revendication 1, **caractérisé en ce que** le premier dispositif déployable présente une première bague mobile (20) par rapport à la partie supérieure et au moins un bras souple (22) avec une première extrémité reliée à la première bague mobile (20) et une seconde extrémité reliée à la partie inférieure (6) de l'outil.

3. Outil (2) de génération d'ondes sismiques selon la revendication 2, **caractérisé en ce que** le bras souple (22) présente une forme de languette.

4. Outil (2) de génération d'ondes sismiques selon l'une des revendications 2 ou 3, **caractérisé en ce que** le bras souple (22) est à l'extérieur de la chambre de décharge (8) lorsque le dispositif déployable est dans son état déployé.

5. Outil (2) de génération d'ondes sismiques selon l'une des revendications 2 à 4, **caractérisé en ce que** la première bague mobile (20) vient entourer la partie supérieure (4) de l'outil (2) et est adaptée pour se déplacer selon un axe longitudinal de ladite partie supérieure (4).

6. Outil (2) de génération d'ondes sismiques selon l'une des revendications 2 à 5, **caractérisé en ce que** la première bague mobile (20) est associée à des moyens d'engrenages.

7. Outil (2) de génération d'ondes sismiques selon l'une des revendications 2 à 6 **caractérisé en ce que** la première bague mobile (20) présente un taraudage et la partie supérieure (4) présente un filetage.

8. Outil (2) de génération d'ondes sismiques selon l'une des revendications 2 à 7, **caractérisé en ce que** le bras souple (22) présente une armature métallique.

9. Outil (2) de génération d'ondes sismiques selon l'une des revendications 2 à 8, **caractérisé en ce que** le bras souple (22) comprend une partie isolante électriquement en vis-à-vis des électrodes (10, 14).

10. Outil (2) de génération d'ondes sismiques selon l'une des revendications 1 à 9, **caractérisé en ce qu'**un second dispositif déployable relie la partie supérieure (4) à la partie inférieure (6), le second dispositif déployable pouvant présenter un état rétracté et un état déployé dans lequel il est écarté de la chambre de décharge (8).

11. Outil (2) de génération d'ondes sismiques selon la revendication 10, **caractérisé en ce que** le premier dispositif déployable présente une première bague mobile (20) par rapport à la partie supérieure et au moins un bras souple (22) avec une première extrémité reliée à la première bague mobile (20) et une seconde extrémité reliée à la partie inférieure (6) de l'outil, et
**en ce que** le second dispositif déployable présente au moins un bras déformable (32) et une seconde bague mobile (30) qui est disposée autour de la partie supérieure (4) de l'outil (2) du côté opposé à la partie inférieure (6), le bras déformable (32) comportant une première extrémité reliée à la seconde bague mobile (30) et une seconde extrémité reliée à la partie inférieure (6) de l'outil.

12. Outil (2) de génération d'ondes sismiques selon la revendication 11, **caractérisé en ce que** le bras déformable (32) comprend une armature métallique.

13. Outil (2) de génération d'ondes sismiques selon la revendication 11, **caractérisé en ce que** le bras déformable (32) est en un matériau non conducteur électrique.

14. Outil (2) de génération d'ondes sismiques selon l'une des revendications 11 ou 12, **caractérisé en ce que** le bras déformable (32) comprend une partie isolante électriquement en vis-à-vis des électrodes (10, 14).

## Patentansprüche

1. Werkzeug (2) zur Erzeugung seismischer Wellen, wie eine Funkenstrecke einer Lichtbogenerzeugungsvorrichtung, umfassend:
- einen oberen Teil (4) und einen unteren Teil (6), die zwischen ihnen eine Entladungskammer (8) definieren,
- wenigstens einen Haltearm (18), der den oberen Teil (4) mit dem unteren Teil (6) verbindet,
- eine erste Elektrode (10), die dem oberen Teil (4) zugeordnet ist, und eine zweite Elektrode (14), die dem unteren Teil (6) zugeordnet ist, wobei alle beide in der Entladungskammer (8) angeordnet sind,
**dadurch gekennzeichnet, dass** es eine erste entfaltbare Vorrichtung umfasst, die den oberen Teil (4) mit dem unteren Teil (6) verbindet, und
dass der Haltearm (18) einen elektrisch isolierenden Teil gegenüber von den Elektroden (10, 14) umfasst, und
dass eine Stromrückleitung durch die erste entfaltbare Vorrichtung gebildet wird, wobei die entfaltbare Vorrichtung einen zurückgezogenen Zustand und einen entfalteten Zustand aufweisen kann, in dem sie von den Elektroden (10, 14) beabstandet ist.

2. Werkzeug (2) zur Erzeugung seismischer Wellen nach Anspruch 1, **dadurch gekennzeichnet, dass** die erste entfaltbare Vorrichtung Folgendes aufweist: einen ersten, in Bezug auf den oberen Teil beweglichen Ring (20) und wenigstens einen biegsamen Arm (22) mit einem ersten Ende, das mit dem ersten beweglichen Ring (20) verbunden ist, und einem zweiten Ende, das mit dem unteren Teil (6) des Werkzeugs verbunden ist.

3. Werkzeug (2) zur Erzeugung seismischer Wellen nach Anspruch 2, **dadurch gekennzeichnet, dass** der biegsame Arm (22) die Form einer Lasche aufweist.

4. Werkzeug (2) zur Erzeugung seismischer Wellen nach einem der Ansprüche 2 oder 3,
**dadurch gekennzeichnet, dass** sich der biegsame Arm (22) außerhalb der Entladungskammer (8) befindet, wenn die entfaltbare Vorrichtung in ihrem entfalteten Zustand ist.

5. Werkzeug (2) zur Erzeugung seismischer Wellen nach einem der Ansprüche 2 bis 4, **dadurch gekennzeichnet, dass** der erste bewegliche Ring (20) den oberen Teil (4) des Werkzeugs (2) umgibt und dafür eingerichtet ist, sich entlang einer Längsachse des oberen Teils (4) zu bewegen.

6. Werkzeug (2) zur Erzeugung seismischer Wellen nach einem der Ansprüche 2 bis 5, **dadurch gekennzeichnet, dass** der erste bewegliche Ring (20) Verzahnungsmitteln zugeordnet ist.

7. Werkzeug (2) zur Erzeugung seismischer Wellen nach einem der Ansprüche 2 bis 6, **dadurch gekennzeichnet, dass** der erste bewegliche Ring (20) ein Innengewinde aufweist und der obere Teil (4) ein Außengewinde aufweist.

8. Werkzeug (2) zur Erzeugung seismischer Wellen nach einem der Ansprüche 2 bis 7, **dadurch gekennzeichnet, dass** der biegsame Arm (22) eine metallische Bewehrung aufweist.

9. Werkzeug (2) zur Erzeugung seismischer Wellen nach einem der Ansprüche 2 bis 8, **dadurch gekennzeichnet, dass** der biegsame Arm (22) einen elektrisch isolierenden Teil gegenüber von den Elektroden (10, 14) umfasst.

10. Werkzeug (2) zur Erzeugung seismischer Wellen nach einem der Ansprüche 1 bis 9, **dadurch gekennzeichnet, dass** eine zweite entfaltbare Vorrichtung den oberen Teil (4) mit dem unteren Teil (6) verbindet, wobei die zweite entfaltbare Vorrichtung einen zurückgezogenen Zustand und einen entfalteten Zustand aufweisen kann, in dem sie von der Entladungskammer (8) beabstandet ist.

11. Werkzeug (2) zur Erzeugung seismischer Wellen nach Anspruch 10, **dadurch gekennzeichnet, dass** die erste entfaltbare Vorrichtung Folgendes aufweist: einen ersten, in Bezug auf den oberen Teil beweglichen Ring (20) und wenigstens einen biegsamen Arm (22) mit einem ersten Ende, das mit dem ersten beweglichen Ring (20) verbunden ist, und einem zweiten Ende, das mit dem unteren Teil (6) des Werkzeugs verbunden ist, und
dass die zweite entfaltbare Vorrichtung wenigstens einen verformbaren Arm (32) und einen zweiten beweglichen Ring (30) aufweist, der an der Seite, die dem unteren Teil (6) entgegengesetzt ist, um den oberen Teil (4) des Werkzeugs (2) angeordnet ist, wobei der verformbare Arm (32) ein mit dem zweiten beweglichen Ring (30) verbundenes erstes Ende und ein mit dem unteren Teil (6) des Werkzeugs verbundenes zweites Ende beinhaltet.

12. Werkzeug (2) zur Erzeugung seismischer Wellen nach Anspruch 11, **dadurch gekennzeichnet, dass** der verformbare Arm (32) eine metallische Bewehrung umfasst.

13. Werkzeug (2) zur Erzeugung seismischer Wellen nach Anspruch 11, **dadurch gekennzeichnet, dass** der verformbare Arm (32) aus einem elektrisch nicht leitenden Material ist.

14. Werkzeug (2) zur Erzeugung seismischer Wellen nach einem der Ansprüche 11 oder 12,
**dadurch gekennzeichnet, dass** der verformbare Arm (32) einen elektrisch isolierenden Teil gegenüber von den Elektroden (10, 14) umfasst.

## Claims

1. A seismic wave generating tool (2), such as a spark gap of an electric arc generation device, comprising:
- an upper part (4) and a lower part (6) which define a discharge chamber (8) between them,
- at least one retaining arm (18) connecting the upper part (4) to the lower part (6),
- a first electrode (10) associated with the upper part (4) and a second electrode (14) associated with the lower part (6), both arranged in the discharge chamber (8),
**characterised in that** it comprises a first deployable device connecting the upper part (4) to the lower part (6), and
**in that** the retaining arm (18) comprises an electrically insulating part facing the electrodes (10, 14), and
**in that** a current return is implemented by the first deployable device, the deployable device being able to be in a retracted state and in a deployed state in which it is at a distance from the electrodes (10, 14).

2. Seismic wave generating tool (2) according to claim 1, **characterised in that** the first deployable device comprises a first ring (20) that is movable relative to the upper part, and at least one flexible arm (22) with a first end connected to the first movable ring (20) and a second end connected to the lower part (6) of the tool.

3. Seismic wave generating tool (2) according to claim 2, **characterised in that** the flexible arm (22) has a tongue shape.

4. Seismic wave generating tool (2) according to one of claims 2 or 3, **characterised in that** the flexible arm (22) is outside the discharge chamber (8) when the deployable device is in its deployed state.

5. Seismic wave generating tool (2) according to one of claims 2 to 4, **characterised in that** the first movable ring (20) surrounds the upper part (4) of the tool (2) and is adapted to move along a longitudinal axis of said upper part (4).

6. Seismic wave generating tool (2) according to one of claims 2 to 5, **characterised in that** the first movable ring (20) is associated with gear means.

7. Seismic wave generating tool (2) according to one of claims 2 to 6, **characterised in that** the first movable ring (20) has an internal thread and the upper part (4) has an external thread.

8. Seismic wave generating tool (2) according to one of claims 2 to 7, **characterised in that** the flexible arm (22) has a metal frame.

9. Seismic wave generating tool (2) according to one of claims 2 to 8, **characterised in that** the flexible arm (22) comprises an electrically insulating part facing the electrodes (10, 14).

10. Seismic wave generating tool (2) according to one of claims 1 to 9, **characterised in that** a second deployable device connects the upper part (4) to the lower part (6), the second deployable device being able to be in a retracted state and in a deployed state in which it is at a distance from the discharge chamber (8).

11. Seismic wave generating tool (2) according to claim 10, **characterised in that** the first deployable device comprises a first ring (20) that is movable relative to the upper part, and at least one flexible arm (22) with a first end connected to the first movable ring (20) and a second end connected to the lower part (6) of the tool, and
**in that** the second deployable device comprises at least one deformable arm (32) and a second movable ring (30) which is arranged around the upper part (4) of the tool (2) on the side opposite the lower part (6), the deformable arm (32) having a first end connected to the second movable ring (30) and a second end connected to the lower part (6) of the tool.

12. Seismic wave generating tool (2) according to claim 11, **characterised in that** the deformable arm (32) comprises a metal frame.

13. Seismic wave generating tool (2) according to claim 11, **characterised in that** the deformable arm (32) is of an electrically non-conductive material.

14. Seismic wave generating tool (2) according to one of claims 11 or 12, **characterised in that** the deformable arm (32) comprises an electrically insulating part facing the electrodes (10, 14).
